(19) Europäisches Patentamt
European Patent Office
Office européen des brevets

(11) **EP 2 656 329 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(21) Anmeldenummer: **11810580.8**

(22) Anmeldetag: **21.12.2011**

(51) Int Cl.:
**G07D 7/20** (2016.01)

(86) Internationale Anmeldenummer:
**PCT/EP2011/006490**

(87) Internationale Veröffentlichungsnummer:
**WO 2012/084240 (28.06.2012 Gazette 2012/26)**

(54) **VERFAHREN ZUR ERZEUGUNG EINES DIGITALEN BILDES WENIGSTENS EINES ABSCHNITTS EINES WERTDOKUMENTS**

METHOD FOR GENERATING A DIGITAL IMAGE OF AT LEAST ONE SECTION OF A VALUE DOCUMENT

PROCÉDÉ POUR GÉNÉRER UNE IMAGE NUMÉRIQUE D'AU MOINS UNE PARTIE D'UN DOCUMENT DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010055697**

(43) Veröffentlichungstag der Anmeldung:
**30.10.2013 Patentblatt 2013/44**

(73) Patentinhaber: **Giesecke+Devrient Currency Technology GmbH**
**81677 München (DE)**

(72) Erfinder: **HOLL, Norbert**
**82110 Germering (DE)**

(56) Entgegenhaltungen:
**EP-A1- 1 065 631        EP-A1- 2 124 190**
**DE-A1-102010 018 142    US-A1- 2006 023 943**

**Beschreibung**

Die vorliegende Erfindung betrifft ein Verfahren zur Erzeugung eines digitalen Bildes wenigstens eines Abschnitts eines Wertdokuments, insbesondere eines solchen Verfahrens, bei dem das Wertdokument relativ zu einem Erfassungspixelbereich bewegt wird, und eine Vorrichtung zur Durchführung des Verfahrens.

Unter Wertdokumenten werden im Rahmen der Erfindung karten- oder blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandensein ein Indiz für die Echtheit, d.h. die Herstellung durch eine dazu befugten Stelle, ist. Wichtige Beispiele für solche Wertdokumente sind Chipkarten, Coupons, Gutscheine, Schecks, Aktien und insbesondere Banknoten.

Wertdokumente werden typischerweise aus gestalterischen Gründen, zur Unterscheidbarkeit und zum Schutz gegen einfache Fälschungen mit einer graphischen Gestaltung, beispielsweise mehr oder weniger komplexen Mustern und/oder Abbildungen, und/oder Zeichen und/oder Zeichenkombinationen und/oder Schriftzügen aufweisen kann, ausgestattet Die graphische Gestaltung kann ganz oder teilweise farbig und/oder schwarz-weiß und/oder in Graustufen ausgeführt sein.

Bedingt durch die beispielsweise im Fall von Banknoten sehr große Zahl von im Umlauf befindlichen Wertdokumenten ist eine maschinelle bzw. automatische Erkennung der Wertdokumente bzw. eine maschinelle bzw. automatische Erkennung des Zustands der Wertdokumente wünschenswert Hierzu können die Wertdokumente mit großer Geschwindigkeit in entsprechenden Wertdokumentbearbeitungsvorrichtungen an optischen Sensoren vorbeitransportiert werden, die jeweils während des Vorbeitransports ein Bild des jeweiligen Wertdokuments erfassen.

Es hat sich jedoch gezeigt, daß Bilder, die in solchen Vorrichtungen mit hoher Auflösung erfaßt werden, oft nicht die gewünschte Bildqualität aufweisen.

In EP 2124 190 A1 ist ein Verfahren zum Schärfen von verwischten Bildern beschrieben. Verwischte Bilder werden dadurch geschärft, dass drei Kanäle von RGB-Daten in eine einzelnen Kanal von Intensitätsdaten konvertiert wird, die Intensitätsdaten verarbeitet werden, um Integralbilddaten zu erzeugen, ein Filter variabler Größe auf die Integralbilddaten angewendet wird, um mit einem Box-Filter gefilterte Daten zu erzeugen, und ein Verstärkungsfaktor für jeden Pixelort in Abhängigkeit von den mit dem Box-Filter gefilterten Daten, den Intensitätsdaten und der für den Ort benutzten Größe des Filters berechnet wird. Die Original-RGB-Daten für jedes Pixel werden dann mit dem Verstärkungsfaktor für das Pixel multipliziert um geschärfte RGB-Daten zu erzeugen. Die Größe des Filters wird an jedem Pixelort in Abhängigkeit von einer Schätzung des lokalen Ausmaßes der Verwischung bzw. Unschärfe gewählt. Auf diese Weise ändert sich die Größe des Filters entsprechend der Änderung des Ausmaßes der Verwischung. Durch Verarbeiten der Integralbilddaten zur Erzeugung von mit einem Box-Filter gefilterten Daten, ist eine konstante Anzahl von Verarbeitungsoperationen für das Bildschärfen notwendig, unabhängig von der Größe der benutzten Filter.

In DE 10 2010 018142 A1 ist ein Verfahren zur Aufnahme eines Bildes eines an einer TDI-Kamera vorbeibewegten Objekts beschrieben, wobei die Kamera einen Flächensensor mit rasterartig angeordneten Sensorpixeln umfasst. Die Spaltenrichtung der rasterförmig angeordneten Sensorpixel liegt weitestgehend parallel zur Bewegungsrichtung des Objekts liegt. Während der Bewegung des Objekts in Spaltenrichtung werden fortlaufend in vorgegebenen Aufnahmeintervallen die Ausgangswerte aller Sensorpixel für die Ermittlung der Helligkeit bzw. Farbe eines konkreten Objektpunkts am Objekt ermittelt. Dann wird die Geschwindigkeit des Objekts im Verhältnis zum Quotienten L zwischen Abstand des Bildbereichs zweier benachbarter Sensorpixel einer Spalte und dem Aufnahmeintervall festgelegt. Für jede der Pixelspalten wird ein Superresolution-Faktor N auf einen ganzzahligen Wert festgelegt wird, wobei der Quotient, und entweder der Abstand oder das Aufnahmeintervall, durch die Formel L = 1 + 1/N festgelegt wird. Jedem Pixel einer Spalte wird entsprechend seiner Lage in der Spalte ein fortlaufender nummerierter Index P zugeordnet. Zu jedem Aufnahmezeitpunkt t = T.dt werden die einzelnen Helligkeitswerte H(P, T) bzw. Farbwerte jedes der einzelnen Sensorpixel einer Spalte ermittelt, wobei T einen diskreten, insbesondere ganzzahligen, Index für den jeweiligen Aufnahmezeitpunkt bezeichnet. Nach jeder Aufnahme die ermittelten Helligkeitswerte H(P, T) einer diskret definierten Funktion Y zugewiesen werden, wobei für jeden ermittelten Helligkeitswert H(P, T) ein Funktionswert Y(T.(1 + 1/N) + P) eingetragen wird. Es wird dann eine Ausgangsfunktion (X) ermittelt, indem ein Auflösungsfaktor R auf einen ganzzahligen Wert festgelegt wird, wobei dessen Wert kleiner ist als der Wert des Superresolution-Faktors N, und für die Ausgangsfunktion X ein diskreter Definitionsbereich festgelegt wird, wobei die diskreten Punkte, an denen die Ausgangsfunktion definiert ist, in Intervallen 1/R voneinander entfernt sind, und wobei zumindest ein Definitionspunkt der Ausgangsfunktion X mit einem Definitionspunkt der Funktion Y übereinstimmt; Zeitintervalle der Funktion Y und der Ausgangsfunktion X werden ermittelt, die von denselben Randpunkten begrenzt werden; ein Zusammenhang zwischen den Funktionswerten der Ausgangsfunktion X und der Funktion Y in der Form Y=HU*F*X wird angenommen, wobei die einzelnen Funktionswerte der jeweiligen Funktionen innerhalb des Intervalls als Vektor X, Y von in den einzelnen Punkten des jeweiligen Definitionsbereichs definierten Funktionswerten festgestellt werden; dabei ist F eine Interpolationsmatrix, gegebenenfalls die Einheitsmatrix, die eine Interpolation von auf dem Definitionsbereich der Funktion Y definierten Werten auf den Definitionsbereich der Ausgangsfunktion X darstellt; HU stellt eine Unschärfe-Matrix dar, die die resultierende Unschärfe der Aufnahme eines Gegenstandsbereichs der Breite dp und dessen Zuordnung auf einen Bereich der Breite von dp/R wiedergibt; die gegebene Gleichung wird nach dem Vektor aufgelöst wird und die Ausgangsfunktion bzw. die für jede der Spalten ermittelte Anzahl von Ausgangsfunktionen als Abbild des Objekts weiterverarbeitet.

Der vorliegenden Erfindung liegt daher die Aufgabe zugrunde, ein Verfahren zur Erzeugung bzw. Ermittlung von digitalen Bildern von wenigstens Abschnitten von Wertdokumenten zu schaffen, das eine hohe Bildqualität erlaubt und schnell durchzuführen ist, und Mittel zur Durchführung des Verfahrens bereitzustellen.

Die Aufgabe wird gelöst durch ein Verfahren gemäß Anspruch 1, eine Einrichtung gemäß Anspruch 13 und eine Vorrichtung gemäß Anspruch 14.

Die Anmeldung beschreibt ein Verfahren zum Ermitteln eines digitalen Bildes wenigstens eines Abschnitts eines Wertdokuments aus Folgen von Erfassungspixeldaten, die dadurch erhältlich sind, daß der Abschnitt des Wertdokument in einer vorgegebenen Transportrichtung mit einer vorgegebenen Geschwindigkeit durch sich in Transportrichtung erstreckende Erfassungspixelbereiche transportiert wird, während des Vorbeitransports für die Erfassungspixelbereiche jeweils während Integrationsintervallen einer vorgegebenen Folge von Integrationsintervallen wenigstens eine vorgegebene Eigenschaft von aus dem jeweiligen Erfassungspixelbereich kommender optischer Strahlung erfaßt und als Folge von Erfassungspixeldaten eine zeitliche Folge von den Erfassungszeitintervallen jeweils zugeordneten Erfassungspixeldaten erzeugt wird, die die über das jeweilige Integrationsintervall und den jeweiligen Erfassungspixelbereich integrierte Eigenschaft der optischen Strahlung aus dem jeweiligen Erfassungspixelbereich wiedergeben. Bei dem Verfahren werden die Folgen von Erfassungspixeldaten als Pixeldaten für örtliche Folgen von Pixeln entlang der Transportrichtung für das digitale Bild des Abschnitts des Wertdokuments verwendet und Erfassungspixeldaten wenigstens einer der Folgen von Erfassungspixeldaten werden unter Verwendung von jeweils anderen Erfassungszeitintervallen zugeordneten Erfassungspixeldaten derselben Folge so korrigiert, daß Einflüsse der Bewegung des Wertdokuments in Transportrichtung während der Erfassung der Erfassungspixeldaten auf die Erfassungspixeldaten reduziert werden. Ferner wird beschrieben eine Einrichtung zum Ermitteln eines digitalen Bildes wenigstens eines Abschnitts eines Wertdokuments aus Folgen von Erfassungspixeldaten, die dadurch erhältlich sind, daß der Abschnitt des Wertdokument in einer vorgegebenen Transportrichtung mit einer vorgegebenen Geschwindigkeit durch sich jeweils in Transportrichtung erstreckende Erfassungspixelbereiche transportiert wird, während des Vorbeitransports für die Erfassungspixelbereiche jeweils während Integrationsintervallen einer vorgegebenen Folge von Integrationsintervallen wenigstens eine Eigenschaft von aus dem jeweiligen Erfassungspixelbereich kommender optischer Strahlung erfaßt und eine zeitliche Folge von den Erfassungszeitintervallen jeweils zugeordneten Erfassungspixeldaten erzeugt wird, die die über das jeweilige Integrationsintervall und den jeweiligen Erfassungspixelbereich integrierte Eigenschaft der optischen Strahlung aus dem jeweiligen Erfassungspixelbereich wiedergeben, wobei die Vorrichtung eine Korrektureinrichtung umfaßt, die so ausgebildet ist, daß diese das zuvor genannte Ermittlungsverfahren ausführt. Ferner wird beschrieben ein Verfahren zum Erzeugen eines digitalen Bildes wenigstens eines Abschnitts eines Wertdokuments, bei dem der Abschnitt des Wertdokument in einer vorgegebenen Transportrichtung mit einer vorgegebenen Geschwindigkeit durch sich jeweils in Transportrichtung erstreckende Erfassungspixelbereiche transportiert wird, während des Vorbeitransports für die Erfassungspixelbereiche jeweils während Integrationsintervallen wenigstens einer vorgegebenen Folge von Integrationsintervallen wenigstens eine Eigenschaft von aus dem jeweiligen Erfassungspixelbereich kommender optischer Strahlung erfaßt und eine zeitliche Folge von den Erfassungszeitintervallen jeweils zugeordneten Erfassungspixeldaten erzeugt wird, die die über das jeweilige Integrationsintervall und den jeweiligen Erfassungspixelbereich integrierte Eigenschaft der optischen Strahlung aus dem jeweiligen Erfassungspixelbereich wiedergeben, die Folgen von Erfassungspixeldaten als Pixeldaten für örtliche Folgen von Pixeln entlang der Transportrichtung für das digitale Bild des Abschnitts des Wertdokuments verwendet werden, wobei Erfassungspixeldaten wenigstens einer der Folgen von Erfassungspixeldaten unter Verwendung von jeweils anderen Erfassungszeitintervallen zugeordneten Erfassungspixeldaten derselben Folge so korrigiert werden, daß Einflüsse der Bewegung des Wertdokuments in Transportrichtung während der Erfassung der Erfassungspixeldaten auf die Erfassungspixeldaten reduziert werden. Ferner wird beschrieben eine Vorrichtung zum Erzeugen eines digitalen Bildes wenigstens eines Abschnitts eines Wertdokuments, mit einer Bilderfassungseinrichtung, an der der Abschnitt des Wertdokument in einer vorgegebenen Transportrichtung mit einer vorgegebenen Geschwindigkeit durch sich in Transportrichtung erstreckende Erfassungspixelbereiche transportierbar ist, die während des Vorbeitransports für die Erfassungspixelbereiche jeweils während Integrationsintervallen einer vorgegebenen Folge von Integrationsintervallen wenigstens eine Eigenschaft von aus dem jeweiligen Erfassungspixelbereich kommender optischer Strahlung erfaßt und eine zeitliche Folge von den Erfassungszeitintervallen jeweils zugeordneten Erfassungspixeldaten erzeugt, die die über das jeweilige Integrationsintervall und den jeweiligen Erfassungspixelbereich integrierte Eigenschaft der optischen Strahlung aus dem jeweiligen Erfassungspixelbereich wiedergeben, und der genannten Bildermittlungseinrichtung.

Die Erfindung geht aus von einer an sich bekannten Erfassung eines Bildes eines vorgegebenen Abschnitts eines Wertdokuments durch Transportieren des Abschnitts an einer Bilderfassungseinrichtung vorbei und gleichzeitiges Erfassen eines Bildes des Abschnitts mit der Bilderfassungseinrichtung. Genauer wird das Wertdokument mittels einer Transporteinrichtung, die vorzugsweise Teil der Erzeugungsvorrichtung sein kann, mit der vorgegebenen Geschwindigkeit in der vorgegebenen Transportrichtung entlang eines Transportpfades transportiert. Unter einem Transport mit einer vorgegebenen Transportgeschwindigkeit und einer vorgegebenen Transportrichtung wird dabei insbesondere auch verstanden, daß die tatsächliche Transportrichtung und -geschwindigkeit nur innerhalb der üblichen Schwankungen der Geschwindigkeit eines transportierten Wertdokuments mit der vorgegebene Soll-Transportrichtung und -geschwindigkeit übereinzustimmen brauchen.

Mittels der an dem Transportpfad angeordneten Bilderfassungseinrichtung wird in vorgegebenen Erfassungszeitintervallen bzw. zu vorgegebenen Zeitpunkten von dem Abschnitt kommende optische Strahlung bzw. genauer wenigstens eine vorgegebenen Eigenschaft dieser Strahlung erfaßt Als Eigenschaft wird vorzugsweise die Intensität der Strahlung, besonders bevorzugt in einem vorgegebenen Wellenlängenbereich und/oder einer vorgegebenen Polarisation, verwendet. Die Bilderfassungseinrichtung kann dazu quer zur Transportrichtung angeordnete, gegebenenfalls auch zusätzlich in Transportrichtung versetzt, wenigstens zwei Erfassungselemente aufweisen.

Jedes der Erfassungselemente erfaßt optische Strahlung aus einem diesem entsprechenden Erfassungspixelbereich, der sich sowohl in Transportrichtung als auch quer dazu erstreckt. Damit ergibt sich quer zur Transportrichtung eine örtliche Auflösung. Die von jeweils einem Erfassungspixelbereich ausgehende optische Strahlung in den vorgegebenen Erfassungszeitintervallen wird jeweils während eines vorgegebenen Integrationsintervalls innerhalb des jeweiligen Erfassungszeitintervalls integrierend erfaßt. Die Länge der Integrationsintervalle kann dabei der Länge der Erfassungszeitintervalle entsprechen oder auch kleiner sein. Die Dauer der Integrationsintervalle kann zwar für verschiedene Erfassungszeitintervalle unterschiedlich sein, doch ist sie vorzugsweise für alle Integrationsintervalle gleich. Weiter können vorzugsweise die Erfassungszeitintervalle gleich lang sein. Die Bilderfassungseinrichtung erzeugt so die zeitliche Folge von Erfassungspixeldaten, die dem jeweiligen Erfassungspixelbereich zugeordnet ist und die bedingt durch den Transport des Wertdokuments, einer Erfassung der Strahlung von in Transportrichtung nacheinander angeordneten Bereichen bzw. Pixeln auf dem Wertdokument entspricht. Unter einer zeitlichen Folge wird dabei eine Folge verstanden, bei der die Position eines Datums der Folge innerhalb der Folge die Zeit der Erzeugung des Datums relativ zu anderen Daten der Folge wiedergibt. Entsprechendes gilt für örtliche Folgen. Damit wird auch eine örtliche Auflösung in Transportrichtung erzielt, wobei die Auflösung sowohl von der Transportgeschwindigkeit als auch von der Dauer der Erfassungszeitintervalle sowie der Dauer der Erfassungsintervalle und der Ausdehnung der Erfassungspixelbereiche in Transportrichtung abhängt. Die genannten Größen sind vorzugsweise in Abhängigkeit voneinander vorgegeben.

Es wurde nun gefunden, daß bei hohen Transportgeschwindigkeiten von bestimmten Bereichen auf einem Wertdokument ausgehende optische Strahlung in wenigstens zwei verschiedenen Integrationsintervallen, beispielsweise unmittelbar aufeinanderfolgenden Integrationsintervallen, erfaßt werden kann. Unter unmittelbar aufeinanderfolgenden Integrationsintervallen werden dabei Integrationsintervalle verstanden, zwischen den kein weiteres Integrationsintervall liegt. Wird dieser Effekt zu groß, gibt die zeitliche Folge von Erfassungspixeldaten nicht mehr in guter Nährung Pixeldaten für eine entsprechende örtliche Folge von Pixeln auf dem Wertdokument wieder, es kommt vielmehr zu einer Art Verschmierung.

Es ist nun vorgesehen, Erfassungspixeldaten wenigstens einer der Folgen zu korrigieren, um den genannten Effekt zu reduzieren. Dazu wird ein entsprechendes Erfassungspixeldatum, das einem Integrationsintervall der Folge entspricht, unter Verwendung wenigstens eines Erfassungspixeldatums für denselben Erfassungspixelbereich, aber ein anderes Erfassungsdauerintervall der Folge, so korrigiert, daß Einflüsse der Bewegung des Wertdokuments in Transportrichtung während der Erfassung der Erfassungspixeldaten auf die Erfassungspixeldaten reduziert werden.

Damit wird auf einfache Weise eine gute Bildqualität auch bei hohen Transportgeschwindigkeiten erzielt, ohne daß besonders hochempfindliche Strahlungsempfänger oder besonders hochintensive Beleuchtungsstrahlung verwendet werden müßten.

Das Korrigieren kann beginnen, wenn bereits alle Erfassungspixeldaten einer Folge verfügbar sind. Alternativ können bei dem Korrigieren Erfassungspixeldaten einer Folge korrigiert werden, bevor alle Erfassungspixeldaten der Folge verfügbar sind. Dies bietet den Vorteil einer besonders schnellen Verarbeitung bei nur geringem Speicherplatzbedarf zur Speicherung der Daten für das Korrigieren.

Das Korrigieren kann grundsätzlich in beliebiger, aber geeigneter Weise erfolgen. Gemäß einer bevorzugten Ausführungsform der Verfahren werden bei dem Korrigieren der Erfassungspixeldaten der wenigstens einen Folge bei einer ersten Korrektur die Erfassungspixeldaten für wenigstens eines der Integrationsintervalle der Folge der Integrationsintervalle zunächst in Abhängigkeit von den Erfassungspixeldaten derselben Folge für ein dem Integrationsintervall vorhergehendes, vorzugsweise unmittelbar vorhergehendes, der Erfassungsdauerinterintervalle oder ein dem Integrationsintervall folgendes, vorzugsweise unmittelbar folgendes, der Integrationsintervalle so geändert, daß die durch die Erfassungspixeldaten dargestellte integrierte Eigenschaft reduziert wird. Diese Ausführungsform bietet den Vorteil einer einfachen Implementierung.

Bei dieser Korrektur können Parameter verwendet werden, die geeignet zu bestimmen sind. Eine solche Bestimmung ist prinzipiell für gegebenen Bedingungen experimentell möglich. Besonders bevorzugt ist es jedoch, daß das Ändern der Erfassungspixeldaten bei der ersten Korrektur zusätzlich in Abhängigkeit von der Transportgeschwindigkeit und/oder der Länge des Integrationsintervalls und/oder der Ausdehnung des Erfassungspixelbereichs in Transportrichtung erfolgt Das Ändern kann so einfach an eine Veränderung der genannten Umstände angepaßt werden.

Dabei ist es besonders bevorzugt, daß beim Korrigieren bei einer zweiten Korrektur die bei der ersten Korrektur korrigierten Erfassungspixeldaten für die wenigstens eine Folge und das wenigstens eine Integrationsintervall in Abhängigkeit von den Erfassungspixeldaten und/oder den bei der ersten Korrektur korrigierten Erfassungspixeldaten derselben Folge für ein dem wenigstens einen Integrationsintervall folgendes, vorzugsweise unmittelbar folgendes, der Erfassungsdauerinterintervalle bzw. ein dem Integrationsintervall vorhergehendes, vorzugsweise unmittelbar vorhergehendes, der Integrationsintervalle so geändert werden, daß eine durch die Erfassungspixeldaten dargestellte integrierte Eigenschaft reduziert wird. Dieses Vorgehen hat den Vorteil, daß Einflüsse durch vorhergehende und folgende Integrationsintervalle reduziert werden können. Auch hier können die Parameter analog zu dem zuvor Beschriebenen gewählt werden. Insbesondere kann vorzugsweise das Ändern bei der zweiten Korrektur zusätzlich in Abhängigkeit von der Transportgeschwindigkeit und/oder der Länge des Integrationsintervalls und/oder der Ausdehnung des Erfassungspixelbereichs in Transportrichtung erfolgen.

Weiter hat es sich als vorteilhaft erwiesen, daß zur Korrektur nach der ersten und der zweiten Korrektur die bei der zweiten Korrektur korrigierten Erfassungspixeldaten mit einem von der Transportgeschwindigkeit, der Länge der Integrationsintervalls und der Ausdehnung des Erfassungspixelbereichs in Transportrichtung abhängigen Faktor korrigiert werden. Dies hat den Vorteil, daß die korrigierten Erfassungspixeldaten zwar im Hinblick auf den Transport korrigiert sind, der Einfluß dieser Korrektur auf die Absolutwerte jedoch wenigstens teilweise kompensiert werden kann.

Bei einer anderen bevorzugten Ausführungsform ist vorgesehen, daß bei dem Korrigieren der Erfassungspixeldaten wenigstens ein, vorzugsweise zusammenhängender, Teil der Folge der Erfassungspixeldaten gefiltert wird. Das Filtern kann insbesondere darin bestehen, daß der Teil der Folge oder die ganze Folge mit einer Filterfunktion, insbesondere einer Filtermatrix, verknüpft wird, wobei das Ergebnis vorzugsweise wieder eine Folge ist, die dieselbe Anzahl von Mitgliedern aufweist, wie der Teil der Folge bzw. die ganze Folge.

Besonders bevorzugt kann zum Filtern der Teil der Folge mit einer, vorzugsweise symmetrischen, Filterfunktion gefaltet werden. Besonders bevorzugt wird als Filterfunktion eine Filtermatrix verwendet; die Faltung besteht dann in einer Multiplikation eines aus dem Teil der Folge gebildeten Vektors, vorzugsweise eines aus der gesamten Folge gebildeten Vektors, und der Filtermatrix, die vorzugsweise symmetrisch ist Die Multiplikation mit dem Vektor kann insbesondere so ausgeführt werden, daß nacheinander Zeilen der Filtermatrix mit der Folge bzw. dem Vektor multipliziert werden, wobei bei der Summe nur Summanden berücksichtigt werden, in denen die Matrixelemente nicht Null sind.

Vorzugsweise kann die Filterfunktion mit zunehmendem Abstand abfallen. Unter dem Abfallen mit zunehmendem Abstand wird dabei insbesondere im Fall einer Filtermatrix verstanden, daß die Beträge der Elemente in einer Spalte oder einer Zeile ausgehend von der Diagonalen der Matrix mit zu- und abnehmender Zeilen- bzw. Spaltennummer kleiner werden.

Besonders gute Ergebnisse lassen sich erzielen, wenn die Filterfunktion mit zunehmendem Abstand wenigstens einmal das Vorzeichen wechselt Im Falle einer Filtermatrix bedeutet dies, daß wenigstens zwei aufeinanderfolgende Elemente einer Zeile der Filtermatrix, die nicht Null sind, unterschiedliches Vorzeichen aufweisen.

Prinzipiell kann die Filterfunktion, insbesondere die Filtermatrix, durch Versuche ermittelt werden. Vorzugsweise wird jedoch für eine Folge von Eigenschaftswerten, die die optische Eigenschaft von in Transportrichtung aneinandergrenzenden Feldern darstellen, die jeweils die Ausdehnung eines Erfassungspixelbereichs und über die Ausdehnung konstante optische Eigenschaften aufweisen und mit vorgegebener Transportgeschwindigkeit in der Transportrichtung durch die Erfassungspixelbereiche transportiert werden, für gegebene Ausdehnung der Erfassungspixelbereiche, Erfassungszeitintervalle, Transportgeschwindigkeit und Integrationsintervalle eine Übertragungsfunktion ermittelt, mittels derer aus der Folge von Eigenschaftswerten eine Folge von erwarteten Erfassungspixeldaten ermittelbar ist, und aus der Übertragungsfunktion die Filterfunktion wenigstens näherungsweise ermittelt. Vorzugsweise wird als Übertragungsfunktion eine Übertragungsmatrix verwendet, die Filterfunktion kann dann insbesondere die Inverse der Übertragungsmatrix oder eine Näherung für die Inverse sein. Im Fall der Näherung ist die maximale prozentuale Abweichung der Werte der Elemente der Filtermatrix von den entsprechenden Werten der Elemente der genauen Matrix vorzugsweise kleiner als 5% besonders bevorzugt kleiner als 1%.

Die Erfindung wird im Folgenden noch weiter beispielhaft an Hand der Zeichnungen erläutert. Es zeigen:

Fig. 1     eine schematische Ansicht einer Wertdokumentbearbeitungsvorrichtung,

Fig. 2     eine schematische Ansicht eines Teils einer Sensoreinrichtung der Vorrichtung in Fig. 1 in Transportrichtung,

Fig. 3     Diagramme, die die Bewegung von Wertdokumentpixelbereichen durch einen Erfassungspixelbereich der Sensoreinrichtung in Fig. 1 veranschaulichen,

Fig. 4     Diagramme, die die Überlappung F von Wertdokumentpixelbereichen und dem Erfassungspixelbereich in Fig. 3 als Funktion der Zeit t und die Integrationsfunktion einer Erfassungselements der Sensoreinrichtung in Fig.

3 als Funktion der Zeit t,

Fig. 5   ein grob schematisches Ablaufdiagramm eines ersten Verfahrens zum Erzeugen eines digitalen Bildes, und

Fig. 6   ein grob schematisches Ablaufdiagramm eines zweiten Verfahrens zum Erzeugen eines digitalen Bildes.

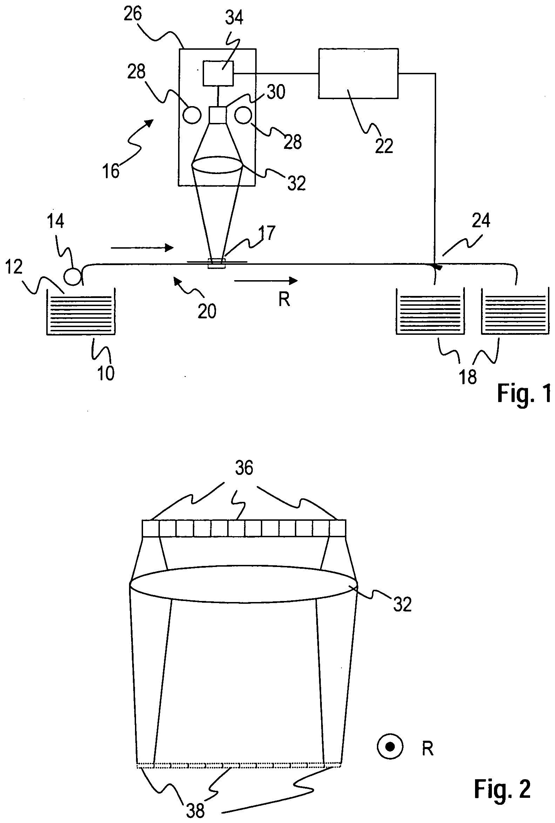

Eine Wertdokumentbearbeitungsvorrichtung in Fig. 1, im Beispiel eine Banknotenbearbeitungsvorrichtung zum Sortieren von Banknoten in Abhängigkeit von deren Echtheit und/oder Zustand, verfügt über einen Eingabebereich 10 zur Aufnahme gestapelter Wertdokumente 12, im Beispiel Banknoten, einen Vereinzeler 14 zur Vereinzelung von Wertdokumenten 12 aus dem Eingabebereich 10, eine Sensoreinrichtung 16 zur Erfassung wenigstens einer vorgegebenen Eigenschaft der vereinzelten Wertdokumente 12 in einem Erfassungsbereich 17 der Sensoreinrichtung 16, im Beispiel eines Bildes, und Ausgabefächer 18 zur Aufnahme mittels der Sensoreinrichtung geprüfter Wertdokumente 12 und eine Transporteinrichtung 20 zum Transport der Wertdokumente von dem Vereinzeler 14 in einer Transportrichtung R durch den Erfassungsbereich 17 zu den Ausgabefächern 18. Die Wertdokumentbearbeitungsvorrichtung umfaßt weiter eine Steuereinrichtung 22, die über Signalverbindungen mit der Sensoreinrichtung 16 und der Transporteinrichtung 20 verbunden ist und die Transporteinrichtung 20 in Abhängigkeit von Signalen der Sensoreinrichtung 16 steuert Die Sensoreinrichtung 16 erfaßt das Bild und ermittelt in Abhängigkeit von dem erfaßten Bild, ob das Wertdokument wenigstens ein vorgegebenes Kriterium für die Echtheit und/oder den Zustand des Wertdokuments erfüllt, und erzeugt ein Signal, das das Ergebnis der Prüfung darstellt Die Steuereinrichtung 22 erfaßt das Signal und steuert in Abhängigkeit von diesem Signal die Transporteinrichtung 20, im Beispiel eine Weiche 24, so an, daß das von der Sensoreinrichtung 16 erfaßt Wertdokument entsprechend dem Ergebnis der Prüfung in ein vorgegebenes der Ausgabefächer 18 transportiert wird. In anderen Ausführungsbeispielen kann noch wenigstens eine weiterer Sensoreinrichtung vorgesehen sein, die Eigenschaften eines vereinzelten, von der Transporteinrichtung 20 transportierten Wertdokuments erfaßt, ein vorgegebenes Kriterium für die jeweilige erfaßte Eigenschaft prüft und ein entsprechendes, das Ergebnis der Prüfung darstellendes Signal an die Steuereinrichtung 22 abgibt. Die Steuereinrichtung 22 kann dann die Transporteinrichtung 20 zusätzlich in Abhängigkeit von diesem Signal ansteuern.

Die in Fig. 2 genauer, aber nur schematisch dargestellt Sensoreinrichtung 16 umfaßt in einem Sensorgehäuse 26 unter anderem eine Beleuchtungseinrichtung 28 zur Beleuchtung des Erfassungsbereichs 17 mit optischer Strahlung in wenigstens einem vorgegebenen Wellenlängenbereich, im Beispiel mit weißem Licht und IR-Strahlung, eine Zeilenkamera 30 zur Erfassung von aus dem Erfassungsbereich kommender optischer Strahlung in vorgegebenen Wellenlängenbereichen und eine Abbildungsoptik 32 zur Abbildung des Erfassungsbereichs auf die Zeilenkamera 30, d.h. zur Fokussierung der aus dem Erfassungsbereich 17 kommenden optischen Strahlung auf die Zeilenkamera 30. Das Gehäuse 26 weist ein Fenster auf, durch die aus dem Erfassungsbereich kommende Strahlung zu der Abbildungsoptik 32 gelangen kann. Ferner verfügt die Sensoreinrichtung 16 über eine unter anderem als Korrektureinrichtung im Sinne der Erfindung dienende Auswerteeinrichtung 34, die Signale der Zeilenkamera 30 empfängt und auswertet Insbesondere ist sie zusammen mit der Zeilenkamera 30 zur Durchführung des im Folgenden beschriebenen Verfahrens zum Erzeugen eines digitalen Bildes wenigstens eines Abschnitts eines Wertdokuments, im Beispiel eines Abschnitts über die gesamte Ausdehnung des Wertdokuments in Transportrichtung R, ausgebildet.

Die Wertdokumente werden in einer Transportebene, die in Fig. 1 orthogonal zur Zeichenebene parallel zur Transportrichtung R, in der die Wertdokumente durch den Erfassungsbereich 17 transportiert werden, transportiert Die Zeilenkamera 30 verfügt über wenigstens eine Zeile von im folgenden als Sensorelementen bezeichneten Erfassungselementen 36, im Beispiel vier Zeilen von Sensorelementen. Vor jeder Zeile ist ein Filter angeordnet, mittels dessen die aus dem Erfassungsbereich 17 auf die Zeile fallende Strahlung gefiltert wird. Im Beispiel sind Filter für rotes, grünes und blaues Licht und infrarote Strahlung vorgesehen. Da die Zeilen bis auf die Ausbildung der nicht gezeigten Filter gleich ausgebildet sind, werden im Folgenden nur eine Zeile und die Verarbeitung der Signale der Sensorelemente der Zeile weiter beschrieben. Jedes der Sensorelemente ist mit der Auswerteeinrichtung 34 über eine Signalverbindung verbunden, über die die Auswerteeinrichtung 34 die Signale der Sensorelemente erfaßt, bzw. diese ausliest.

Wie in Fig. 1 und 2 schematisch gezeigt, sind die gleich ausgebildeten Sensorelemente 36 einer Zeile entlang einer quer zur Transportrichtung R und parallel zur Transportebene verlaufenden geraden Linie angeordnet Durch diese Anordnung werden entsprechend parallel quer zur Transportrichtung R liegenden Erfassungspixelbereiche 38 des Erfassungsbereichs auf die Sensorelemente 36 abgebildet, so daß ein Erfassungspixelbereich 38 jeweils auf genau auf eines der Sensorelemente 36 abgebildet wird. Jedem Erfassungspixelbereich ist daher ein Sensorelement zugeordnet und umgekehrt

Da die Sensorelemente gleich arbeiten und die Verarbeitung der Signale der Sensorelemente in gleicher Weise erfolgt, braucht im Folgenden nur die Arbeitsweise und die Signalverarbeitung für ein Sensorelement beschrieben zu werden.

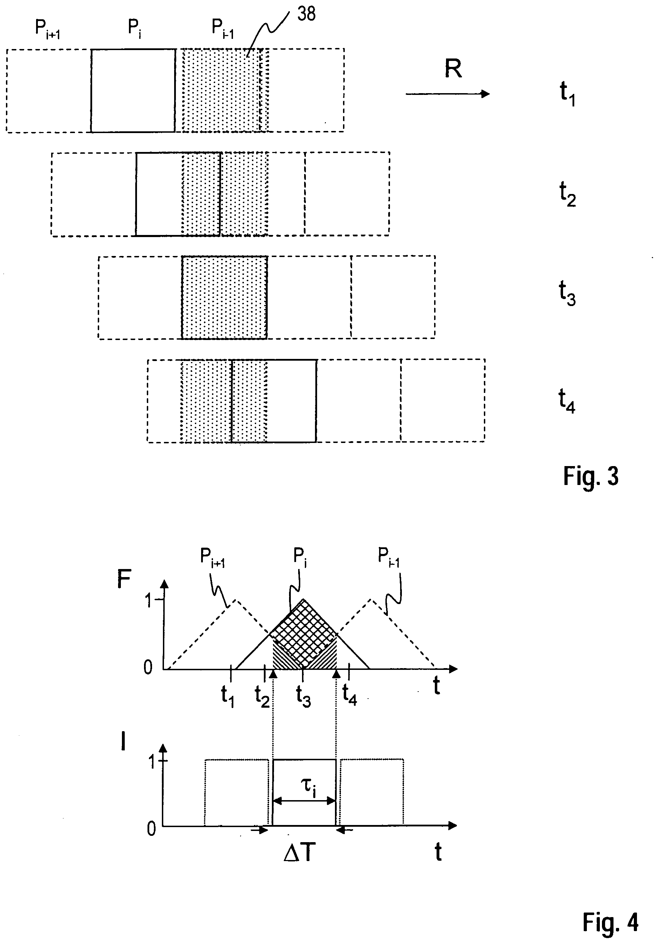

Während des Transports des Wertdokuments an der Sensoreinrichtung 16 vorbei werden in vorgegebenen, unmittelbar aufeinanderfolgenden Erfassungszeitintervallen $\Delta T$, die im vorliegenden Beispiel gleich lang sind, jeweils die Intensitäten der auf die jeweiligen Sensorelemente fallenden optischen Strahlung von den Sensorelementen erfaßt und in Sensorsignale umgesetzt (vgl. Fig. 4).

Genauer erfaßt jedes der Sensorelemente über vorgegebene Integrationsintervalle $\tau$ innerhalb der Erfassungszeitintervalle die gesamte auf das jeweilige Sensorelement gelangende optische Strahlung und bildet aus dieser ein Sensorsignal für das jeweilige Integrationsintervall. Dabei wird die Intensität der auf das Sensorelement fallenden optischen Strahlung, d. h. der aus dem zugeordneten Erfassungspixelbereich kommenden, durch einen der erwähnten Filter gefilterten optischen Strahlung, über den Erfassungspixelbereich örtlich und das jeweilige Integrationsintervall zeitlich integrierend erfaßt, so daß das Sensorsignal die entsprechende Strahlungsenergie wiedergibt. Die Integrationsintervalle sind im vorliegenden Ausführungsbeispiel gleich lang und liegen innerhalb der entsprechenden Erfassungszeitintervalle an dergleichen Stelle, im Beispiel am Ende.

Häufig sind die Integrationsintervalle etwas kürzer als die Erfassungszeitintervalle, um ein Auslesen der Sensorelemente zu ermöglichen.

Durch die Erfassung der Eigenschaft der optischen Strahlung in den vorgegebenen Erfassungszeitintervallen bzw. Integrationsintervallen innerhalb der Erfassungszeitintervalle, entsteht eine zeitliche Folge von dem jeweiligen Sensorelement und damit dem entsprechenden Erfassungspixelbereich zugeordneten Sensorsignalen. Die Auswerteeinrichtung 34 bildet aus dieser Folge von Sensorsignalen, soweit die Sensorsignale nicht bereits geeignet digitalisiert sind unter Digitalisierung, eine zeitliche Folge von Erfassungspixeldaten, die jeweils den durch die Sensorsignale dargestellten Eigenschaftswert der erfaßten optischen Strahlung, im Beispiel der Strahlungsenergie darstellen.

Durch den gleichzeitigen Transport des Wertdokuments an der Sensoreinrichtung 16 vorbei entspricht dieser zeitlichen Folge von Erfassungspixeldaten für ein Sensorelement bzw. den diesem zugeordneten Erfassungspixelbereich eine örtliche Folge von Erfassungspixeldaten, die wenigstens näherungsweise Pixeldaten einer örtlichen Folge von Pixeln auf dem Wertdokument in Transportrichtung R entspricht Zusammen mit der Ortsauflösung quer zur Transportrichtung R durch die Verwendung der Zeile von Sensorelementen kann so ein Bild des Wertdokuments erhalten werden, das von der Auswerteeinrichtung 34 gebildet wird.

Wie in den Figuren 3 und 4 veranschaulicht, nimmt jedoch bei hohen Transportgeschwindigkeiten die Übereinstimmung zwischen einem durch Erfassungspixeldaten darstellten Wert der Eigenschaft der erfaßten optischen Strahlung und dem entsprechenden Wert bei einem ruhenden Wertdokument ab. Dies ist darauf zurückzuführen, daß während des Integrationsintervalls ein Bereich des Wertdokuments erfaßt wird, der größer, genauer in Transportrichtung länger, ist als die entsprechende Ausdehnung des Erfassungspixelbereichs. Teilbereiche innerhalb des Bereichs befinden sich jedoch unterschiedlich lange innerhalb des Erfassungspixelbereichs.

Dies ist in den Figuren 3 und 4 veranschaulicht. In Fig. 4 sind lediglich zum besseren Verständnis vier, in Transportrichtung unmittelbar hintereinander angeordnete Wertdokumentpixelbereiche $P_{i-2}$, $P_{i-1}$, $P_i$ und $P_{i+1}$ auf einem von der Sensoreinrichtung zu erfassenden, an dieser vorbeitransportierten Wertdokument zu vier aufeinanderfolgenden Zeitpunkt $t_1$, $t_2$, $t_3$ und $t_4$ gezeigt. i bezeichnet dabei eine natürliche Zahl. Die Wertdokumentpixelbereiche werden durch den Erfassungspixelbereich 38 transportiert, der durch eine gepunktete Fläche veranschaulicht ist Zur Zeit $t_1$ ist der Wertdokumentpixelbereich $P_i$ noch nicht in dem Erfassungspixelbereich 38 und zur Zeit $t_2$ zu etwas weniger als der Hälfte. Zur Zeit $t_3$ decken sich die beiden Pixelbereiche, danach wandert der Wertdokumentpixelbereich Pi wieder aus dem Erfassungspixelbereich 38 heraus, wobei der nächste Wertdokumentpixelbereich $P_{i+1}$ in den Erfassungspixelbereich 38 eintritt. In dem oberen Diagramm in Fig. 4 ist dies nochmals veranschaulicht Darin ist die Überlappung F für die Wertdokumentpixel $P_{i-1}$, $P_i$ und $P_{i+1}$ mit dem Erfassungspixel 38 als Funktion der Zeit t dargestellt; vollständige Überlappung entspricht dem Wert 1. Dieser Wert der Überlappung gibt an, wieviel der jeweilige Wertdokumentpixelbereich bzw. die von diesem ausgehende Strahlung zu dem von dem dem Erfassungspixelbereich zugeordneten Sensorelement erfaßten Wert zur Zeit t beiträgt. Das Sensorelement integrierte die Beiträge jeweils über die Integrationsintervalle $\tau_i$. Dies ist in dem unteren Diagramm in Fig. 4 gezeigt, in dem die Größe I als Funktion der Zeit t angibt, ob das Sensorelement integriert, Wert 1, oder nicht, Wert 0. Der von dem Sensorelement für den zugeordneten Erfassungspixelbereich ermittelte Wert ist proportional zu den Flächen unter den Kurven in dem F-t-Diagramm während des Integrationsintervalls. Die entsprechenden Flächen sind durch Schraffuren veranschaulicht, wobei in der Figur die Beiträge der Wertdokumentpixelbereiche $P_{i-1}$ und $P_{i+1}$ teilweise die des Pixelbereichs $P_i$ überdecken.

Der Zeitraum zwischen aufeinanderfolgenden Integrationsintervallen wird zum Auslesen der Sensorelemente verwendet.

Die Längen der Erfassungszeitintervalle und der Integrationsintervalle $\tau$ in den Erfassungszeitintervallen sind in Abhängigkeit von der Transportgeschwindigkeit und der Ausdehnung der Erfassungspixelbereiche in Transportrichtung R gewählt.

Die Signale des Sensorelements stellen eine zeitliche Folge von Erfassungspixeldaten $D_i$ für die Integrationsintervalle $\tau_i$ dar, wobei der Index i gleichzeitig die Reihenfolge der Erfassung darstellt und dem Index des jeweiligen Wertdokumentpixelbereichs entspricht, der während des jeweiligen Integrationsintervalls die maximale Überlappung mit dem Erfassungspixelbereich aufgewiesen hat

Die Folge der Erfassungspixeldaten $D_i$ stellt somit ein näherungsweises Bild einer Spur auf dem Wertdokument dar, die durch die erfaßten Wertdokumentpixelbereiche $P_i$ gebildet wird. Diese Erfassungspixeldaten $D_i$ können daher als Pixelwerte des Bildes verwendet werden.

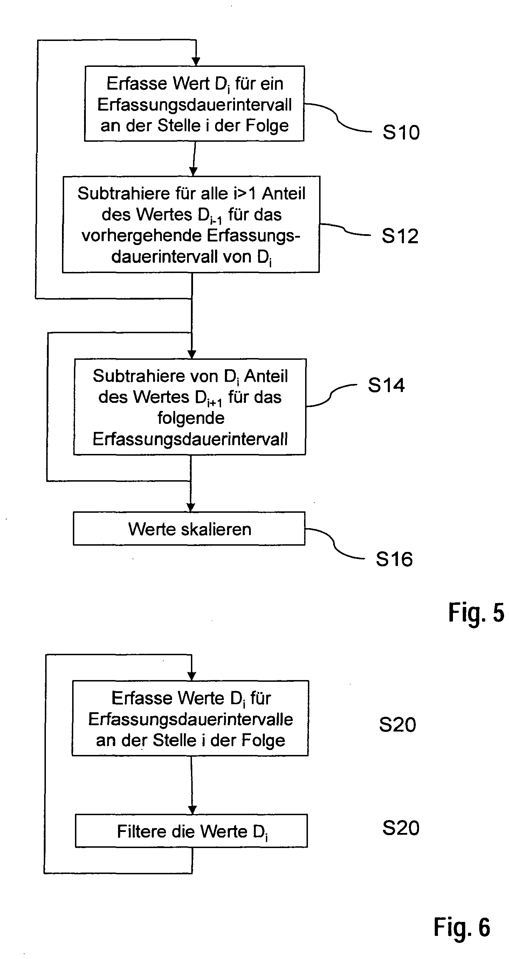

Die Daten $D_i$ werden in der Auswerteeinrichtung 34 aus den Sensorsignalen gebildet und weiterverarbeitet. Die Auswerteeinrichtung 34 verfügt dazu über eine Datenverarbeitungseinrichtung mit einem Prozessor und einem Speicher, in dem ein Programm zur Durchführung des im folgenden geschilderten und in Fig. 5 veranschaulichten Verfahrens gespeichert ist, wenn das Programm mittels des Prozessors ausgeführt wird. Insoweit stellt die Auswerteeinrichtung 34 eine Korrektureinrichtung im Sinne der Erfindung dar.

Es werden wiederum nur die Verfahrensschritte für einen Erfassungspixelbereich geschildert, die für die anderen Erfassungspixelbereiche und Farben werden entsprechend verschachtelt oder nacheinander verarbeitet

Zunächst werden (vgl. Fig. 5) in einem ersten Abschnitt Erfassungspixeldaten erfaßt und einer ersten Korrektur unterzogen. Dieser Abschnitt umfaßt in Fig. 5 die Teilschritte S10 und S12, die im vorliegenden Ausführungsbeispiel miteinander verschachtelt durchgeführt werden.

In einer Schleife über eine Folge von Erfassungspixeldaten wird zunächst ein Wert $D_i$ für ein Integrationsintervall an der Stelle i der Folge erfaßt, wobei der Wert i=1 der erste Wert der Folge für das jeweilige Wertdokument ist und i für jeden Schleifendurchlauf um 1 erhöht wird. Die maximale Anzahl der Werte der Folge sei N.

Der folgende Teilschritt S12 wird nur für Werte i>1 durchgeführt. In diesem Schritt wird von dem Wert $D_i$ das Produkt aus einem Faktor V und dem Wert $D_{i-1}$ für das unmittelbar vorhergehende Integrationsintervall subtrahiert und das Ergebnis als neuer, nun korrigierter Wert $D_i'$ gespeichert. V ist dabei in Abhängigkeit von der Transportgeschwindigkeit, der Länge des Erfassungszeitintervalls, der Länge des Integrationsintervalls und der Ausdehnung des Erfassungspixelbereichs parallel zur Transportrichtung R vorgegeben und ein positiver Wert kleiner als 1. Sollten in anderen Ausführungsbeispielen die Längen der Intervalle variieren, kann auch der Faktor entsprechend variiert werden. Er wird dann für die Längen der Integrationsintervalle i angepaßt vorgegeben.

Wird in Schritt S10 erkannt, daß das Wertdokument den Erfassungspixelbereich verlassen hat, endet die Schleife. Damit werden die Einflüsse wenigstens näherungsweise kompensiert, die dadurch bedingt sind, daß sich während der Erfassung eines Wertdokumentpixelbereichs der vorhergehende Wertdokumentpixelbereich teilweise mit dem Erfassungspixelbereich überlappt.

In einer folgenden Schleife über die Werte i wird eine zweite Korrektur durchgeführt. Dazu wird mit i=N begonnen und i dann bei jedem Schleifendurchlauf um 1 erniedrigt In Schritt S14, der nicht für das letzte Element der Folge, d.h. für i=N, durchgeführt wird, wird von jedem korrigierten Wert $D_i'$ das Produkt aus einem aus einem Faktor H und dem Wert $D_{i+1}'$ für das unmittelbar folgende Integrationsintervall subtrahiert und das Ergebnis als neuer, nun zweifach korrigierter Wert $D_i'$ gespeichert. H ist dabei in Abhängigkeit von der Transportgeschwindigkeit, der Länge des Erfassungszeitintervalls, der Länge des Integrationsintervalls und der Ausdehnung des Erfassungspixelbereichs parallel zur Transportrichtung vorgegeben und ein positiver Wert kleiner als 1. Sollten in anderen Ausführungsbeispielen die Längen der Zeitdauerintervalle variieren, kann auch der Faktor entsprechend variiert werden.

Mit der zweiten Korrektur werden die Einflüsse wenigstens näherungsweise kompensiert, die dadurch bedingt sind, daß sich schon während der Erfassung eines Wertdokumentpixelbereichs der nachfolgende Wertdokumentpixelbereich teilweise mit dem Erfassungspixelbereich überlappt

V und H brauchen nicht gleich zu sein, im vorliegenden Beispiel ist aber V=H gewählt

In dem folgenden Schritt S16 werden die zweifach korrigierten Erfassungspixeldaten $D_i''$ mit einem Faktor N skaliert, der in Abhängigkeit von den Faktoren V und H und damit in Abhängigkeit von der Transportgeschwindigkeit, der Länge des Erfassungszeitintervalls, der Länge des Integrationsintervalls und der Ausdehnung des Erfassungspixelbereichs parallel zur Transportrichtung vorgegeben sein kann. Der Wert von N ist vorzugsweise größer als 1. Hierdurch können Einflüsse der beiden Korrekturen auf die Erfassungspixeldaten, die eine Reduktion der Beträge der Erfassungspixeldaten zur Folge haben, kompensiert werden.

Die Daten $D_i''$ können nun in der Auswerteeinrichtung als Pixeldaten eines Bildes der Spur auf dem Wertdokument verwendet und mit bekannten Verfahren weiterverarbeitet werden.

Ein zweites, in Fig. 6 veranschaulichtes Ausführungsbeispiel unterscheidet sich von dem ersten Ausführungsbeispiel durch die Korrektur der Erfassungspixeldaten und die Ausbildung der Auswerteeinrichtung. Die Verfahrensschritte der Korrektur werden nun in einem eine Teil einer Korrektureinrichtung im Sinne vorliegenden Erfindung bildenden FPGA ausgeführt, das die Ergebnisse an einen Prozessor der Auswerteeinrichtung weitergibt. Im folgenden wird wie im ersten Ausführungsbeispiel nur die Verarbeitung für eine Spur beschrieben und angenommen, daß für eine Spur des Wertdokument und einen Wellenlängenkanal N Erfassungspixeldaten erfaßt werden.

Bei dem Verfahren werden wie im ersten Ausführungsbeispiel in den Schritten S10 entsprechenden Schritten S20 Erfassungspixeldaten $D_i$ erfaßt.

Die erfaßten Erfassungspixeldaten der Folge werden folgendermaßen verarbeitet.

Die Folge der Erfassungspixeldaten $D_i$ wird einer Filterung unterzogen, für die Vektoren $F_i$ verwendet werden, die je nach Wert von i bis zu 2*n+1 Komponenten aufweisen. n ist dabei eine vorgegebenen natürliche Zahl größer als 0, die in Abhängigkeit von der gewünschten Genauigkeit der Korrektur gewählt ist

Gilt 2*n<i<N-n-1, wird eine Multiplikation eines (2*n+1)-dimensionalen Vektors Fi, der Komponenten $F_{ij}$ (j=1,..,2*n+1) besitzt, mit einem Vektor di, gebildet aus den Erfassungspixeldaten $D_{i-n}$, ..., $D_i$, ... $D_{i+n}$, durchgeführt, deren Resultat als korrigierter Wert $D_i'$ für Di verwendet wird:

$$D_i' = F_i * d_i$$

Die Werte der Komponenten von $F_i$ sind in Abhängigkeit von der Transportgeschwindigkeit, der Ausdehnung des Erfassungspixelbereichs in Transportrichtung, der Dauer des Erfassungszeitintervalls und der Dauer des Integrationsintervalls gewählt und für gegebenes j für n<i<N-n gleich.

Für Erfassungspixeldaten $D_i$ mit i<n+1 umfaßt der Vektor di nur die n+i Komponenten $D_1$, ..., $D_i$, ...$D_{i+n}$; dann wird für i<n+1 statt eines Vektors $F_i$ für n<i<N-n nur ein Vektor $F_i'$ mit den letzten n+i Komponenten des Vektors $F_i$ verwendet

$$D_i' = F_i' * d_i$$

Ist N die Gesamtanzahl der Erfassungspixeldaten, umfaßt der Vektor $d_i$ für Erfassungspixeldaten $D_i$ mit i>N-(n+1) nur die N-i+n Komponenten $D_{i-n}$, ..., $D_i$, ...$D_N$; statt des Vektors $F_i$ für n<i<N-n wird bei der Multiplikation dann nur ein Vektor $F_i''$ mit den führenden 2*n+1-i Komponenten des Vektors $F_i$ verwendet

$$D_i' = F_i'' * d_i$$

Dieses Vorgehen entspricht einer Multiplikation eines Vektors mit den Komponenten $D_i$, i=1,...,N mit einer bandförmigen Filtermatrix f mit Elementen $f_{ij}$ in der Zeile i in der Spalte j (i,j=1,...,N).

Die Matrixelemente $f_{ij}$ sind dann folgendermaßen gegeben:

$$\text{Für } i < n+1$$

$$f_{ij} = F_{ij}' \text{ für } j=1,i+n, \text{ 0 sonst,}$$

$$\text{für } n < i < N-n$$

$$f_{ij} = F_{ij} \text{ für } j=i-n, ..., i+n, \text{ 0 sonst,}$$

und

$$\text{für } N-n-1 < i < N+1$$

$f_{ij} = F_{ij}'$ für j=i-n,...,N, 0 sonst.

Diese Matrix ist im vorliegenden Ausführungsbeispiel symmetrisch.

Die Vektoren $F_i$ für n<i<N-n sind damit auch symmetrisch bezüglich des mittleren Elements. Weiter wechseln die Komponenten ausgehend von dem mittleren Element in diesem Ausführungsbeispiel fortschreitend ihr Vorzeichen. Der Vektor $F_i$ kann für n<i<N-n beispielsweise folgendermaßen gegeben sein:

$$(-2 \times 10^{-4}; 10^{-3}; -7 \times 10^{-3}; 0,04; -0,2; 1,4; -0,2; 0,04; -7 \times 10^{-3}; 10^{-3}; -2 \times 10^{-4})$$

Der Vektor $F_i'$ kann dann für i<n+1 die i+n rechten Komponenten des Vektors $F_{n+1}$ und der Vektor $F_i''$ für i>N-

n-1 die i+n linken Komponenten des Vektors $F_{n+1}$ umfassen.

Die Matrix f kann näherungsweise dadurch erhalten werden, daß jedem der Wertdokumentpixelbereiche i ein Soll-Erfassungspixelwert $D_i^0$ zugewiesen wird. Dann können die zu erwartenden Erfassungspixelwerte Di als Funktion der Soll-Erfassungspixelwerte $D_i^0$ berechnet werden, wobei das eingangs geschilderte Modell und vorgegebene Werte für die Transportgeschwindigkeit, die Ausdehnung des Erfassungspixelbereichs in der Transportrichtung, die Dauer der Erfassungszeitintervalle und die Dauer der Integrationsintervalle verwendet werden. Bezeichnet d den Vektor der zu erwartenden Erfassungspixelwerte $D_i$ und $d^0$ den Vektor der Soll-Erfassungspixelwerte $D_i^0$, ergibt sich ein Zusammenhang der Form

$$d = g * d^0$$

g ist dabei eine Bandmatrix, die eine Übertragungsfunktion darstellt Durch näherungsweise oder vorzugsweise exakte Invertierung von g ergibt sich die Filtermatrix f. Deren Einträge können in Abhängigkeit von einem akzeptablen Fehler teilweise auf Null gesetzt werden.

Ein weiteres Ausführungsbeispiel unterscheidet sich von dem zweiten Ausführungsbeispiel darin, daß kein FPGA verwendet wird und die Erfassungspixeldaten zunächst in der Korrektureinrichtung, d. h. der Auswerteeinrichtung, speichert werden. Wenn alle Erfassungspixeldaten einer Folge vorhanden sind, wird die Filterung bzw. Multiplikation mit der Filtermatrix f durchgeführt.

**Patentansprüche**

1. Verfahren zum Ermitteln eines digitalen Bildes wenigstens eines Abschnitts eines Wertdokuments (12) mittels einer Zeilenkamera (30) aus Folgen von Erfassungspixeldaten ($D_i$), die dadurch erhältlich sind, daß der Abschnitt des Wertdokuments (12) in einer vorgegebenen Transportrichtung mit einer vorgegebenen Geschwindigkeit durch sich in Transportrichtung erstreckende, quer zur Transportrichtung liegende Erfassungspixelbereiche (38) transportiert wird,
   während des Vorbeitransports für die Erfassungspixelbereiche (38) jeweils während Integrationsintervallen einer vorgegebenen Folge von Integrationsintervallen wenigstens eine Eigenschaft von aus dem jeweiligen Erfassungspixelbereich (38) kommender optischer Strahlung erfaßt und als Folge von Erfassungspixeldaten ($D_i$) eine zeitliche Folge von den Integrationsintervallen jeweils zugeordneten Erfassungspixeldaten ($D_i$) erzeugt wird, die die über das jeweilige Integrationsintervall und den jeweiligen Erfassungspixelbereich (38) integrierte Eigenschaft der optischen Strahlung aus dem jeweiligen Erfassungspixelbereich (38) wiedergeben, wobei
   bei dem Verfahren die Folgen von Erfassungspixeldaten ($D_i$) als Pixeldaten für örtliche Folgen von Pixeln entlang der Transportrichtung für das digitale Bild des Abschnitts des Wertdokuments (12) verwendet werden und Erfassungspixeldaten ($D_i$) wenigstens einer der Folgen von Erfassungspixeldaten ($D_i$) unter Verwendung von jeweils anderen Integrationsintervallen zugeordneten Erfassungspixeldaten ($D_i$) derselben Folge unabhängig von Erfassungspixeldaten einer anderen der Folgen von Erfassungspixeldaten so korrigiert werden, daß Einflüsse der Bewegung des Wertdokuments (12) mit der vorgegebenen Geschwindigkeit in Transportrichtung während der Erfassung der Erfassungspixeldaten ($D_i$) auf die Erfassungspixeldaten ($D_i$) reduziert werden.

2. Verfahren nach Anspruch 1, bei dem der Abschnitt des Wertdokuments (12) in einer vorgegebenen Transportrichtung mit einer vorgegebenen Geschwindigkeit durch sich jeweils in Transportrichtung erstreckende, quer zur Transportrichtung liegende Erfassungspixelbereiche (38) transportiert wird,
   während des Vorbeitransports für die Erfassungspixelbereiche (38) jeweils während Integrationsintervallen wenigstens einer vorgegebenen Folge von Integrationsintervallen wenigstens eine Eigenschaft von aus dem jeweiligen Erfassungspixelbereich (38) kommender optischer Strahlung erfaßt und eine zeitliche Folge von den Integrationsintervallen jeweils zugeordneten Erfassungspixeldaten ($D_i$) erzeugt wird, die die über das jeweilige Integrationsintervall und den jeweiligen Erfassungspixelbereich (38) integrierte Eigenschaft der optischen Strahlung aus dem jeweiligen Erfassungspixelbereich (38) wiedergeben, und die Folgen von Erfassungspixeldaten ($D_i$) bei dem Verfahren nach Anspruch 1 verwendet werden.

3. Verfahren nach Anspruch 1 oder Anspruch 2, bei dem bei dem Korrigieren Erfassungspixeldaten ($D_i$) einer Folge korrigiert werden, bevor alle Erfassungspixeldaten ($D_i$) der Folge verfügbar sind.

4. Verfahren nach einem der vorhergehenden Ansprüche, bei dem bei dem Korrigieren der Erfassungspixeldaten ($D_i$)

der wenigstens einen Folge bei einer ersten Korrektur die Erfassungspixeldaten ($D_i$) für wenigstens eines der Integrationsintervalle der Folge der Integrationsintervalle zunächst in Abhängigkeit von den Erfassungspixeldaten ($D_i$) derselben Folge für ein dem Integrationsintervall vorhergehendes, vorzugsweise unmittelbar vorhergehendes, der Erfassungsdauerinterintervalle oder ein dem Integrationsintervall folgendes, vorzugsweise unmittelbar folgendes, der Integrationsintervalle so geändert werden, daß die durch die Erfassungspixeldaten ($D_i$) dargestellte integrierte Eigenschaft reduziert wird.

5. Verfahren nach Anspruch 4, bei dem das Ändern der Erfassungspixeldaten ($D_i$) bei der ersten Korrektur zusätzlich in Abhängigkeit von der Transportgeschwindigkeit und/oder der Länge des Integrationsintervalls und/oder der Ausdehnung des Erfassungspixelbereichs (38) in Transportrichtung erfolgt.

6. Verfahren nach Anspruch 4 oder 5, bei dem beim Korrigieren bei einer zweiten Korrektur die bei der ersten Korrektur korrigierten Erfassungspixeldaten ($D_i$) für die wenigstens eine Folge und das wenigstens eine Integrationsintervall in Abhängigkeit von den Erfassungspixeldaten ($D_i$) und/oder den bei der ersten Korrektur korrigierten Erfassungspixeldaten ($D_i$) derselben Folge für ein dem wenigstens einen Integrationsintervall folgendes, vorzugsweise unmittelbar folgendes, der Erfassungsdauerinterintervalle bzw. ein dem Integrationsintervall vorhergehendes, vorzugsweise unmittelbar vorhergehendes, der Integrationsintervalle so geändert werden, daß eine durch die Erfassungspixeldaten ($D_i$) dargestellte integrierte Eigenschaft reduziert wird.

7. Verfahren nach Anspruch 6, bei dem das Ändern zusätzlich in Abhängigkeit von der Transportgeschwindigkeit und/oder der Länge des Integrationsintervalls und/oder der Ausdehnung des Erfassungspixelbereichs (38) in Transportrichtung erfolgt.

8. Verfahren nach Anspruch 6 oder 7, bei dem zur Korrektur nach der ersten und der zweiten Korrektur die bei der zweiten Korrektur korrigierten Erfassungspixeldaten ($D_i$) mit einem von der Transportgeschwindigkeit, der Länge des Integrationsintervalls und der Ausdehnung des Erfassungspixelbereichs in Transportrichtung abhängigen Faktor korrigiert werden.

9. Verfahren nach einem der Ansprüche 1 bis 3, bei dem bei dem Korrigieren der Erfassungspixeldaten ($D_i$) wenigstens ein, vorzugsweise zusammenhängender, Teil der Folge der Erfassungspixeldaten gefiltert wird.

10. Verfahren nach Anspruch 9, bei dem zum Filtern der Teil der Folge mit einer, vorzugsweise symmetrischen, Filterfunktion gefaltet wird.

11. Verfahren nach Anspruch 10, bei dem die Filterfunktion mit zunehmendem Abstand abfällt.

12. Verfahren nach Anspruch 10 oder Anspruch 11, bei dem die Filterfunktion mit zunehmendem Abstand wenigstens einmal das Vorzeichen wechselt.

13. Einrichtung zum Ermitteln eines digitalen Bildes wenigstens eines Abschnitts eines Wertdokuments (12) mit einer Zeilenkamera (30) aus Folgen von Erfassungspixeldaten ($D_i$), die dadurch erhältlich sind, daß der Abschnitt des Wertdokuments (12) in einer vorgegebenen Transportrichtung mit einer vorgegebenen Geschwindigkeit durch sich jeweils in Transportrichtung erstreckende, quer zur Transportrichtung liegende Erfassungspixelbereiche (38) transportiert wird, während des Vorbeitransports für die Erfassungspixelbereiche (38) jeweils während Integrationsintervallen einer vorgegebenen Folge von Integrationsintervallen wenigstens eine Eigenschaft von aus dem jeweiligen Erfassungspixelbereich (38) kommender optischer Strahlung erfaßt und eine zeitliche Folge von den Erfassungszeitintervallen jeweils zugeordneten Erfassungspixeldaten ($D_i$) erzeugt wird, die die über das jeweilige Integrationsintervall und den jeweiligen Erfassungspixelbereich (38) integrierte Eigenschaft der optischen Strahlung aus dem jeweiligen Erfassungspixelbereich (38) wiedergeben, wobei die Einrichtung eine Korrektureinrichtung (34) umfaßt, die so ausgebildet ist, daß diese ein Verfahren nach den Ansprüchen 1 bis 12 ausführt.

14. Vorrichtung zum Erzeugen eines digitalen Bildes wenigstens eines Abschnitts eines Wertdokuments (12), mit einer Bilderfassungseinrichtung (16), an der der Abschnitt des Wertdokuments (12) in einer vorgegebenen Transportrichtung mit einer vorgegebenen Geschwindigkeit durch sich in Transportrichtung erstreckende Erfassungspixelbereiche (38) transportierbar ist, die während des Vorbeitransports für die Erfassungspixelbereiche (38) jeweils während Integrationsintervallen einer vorgegebenen Folge von Integrationsintervallen wenigstens eine Eigenschaft von aus dem jeweiligen Erfassungspixelbereich (38) kommender optischer Strahlung erfaßt und eine zeitliche Folge von den Erfassungszeitintervallen jeweils zugeordneten Erfassungspixeldaten (D$_i$) erzeugt, die die über das jeweilige Integrationsintervall und den jeweiligen Erfassungspixelbereich integrierte Eigenschaft der optischen Strahlung aus dem jeweiligen Erfassungspixelbereich (38) wiedergeben, und
einer Bildermittlungseinrichtung nach Anspruch 13.

**Claims**

1. A method for generating a digital image of at least a portion of a value document (12) by means of a line camera (30) from sequences of capture pixel data (D$_i$), which are obtainable by the portion of the value document (12) being transported in a specified transport direction at a specified speed through capture pixel regions (38) that extend in the transport direction and are disposed transversally to the transport direction,
during said transport past capturing for the capture pixel regions (38), respectively during integration intervals of a specified sequence of integration intervals, at least one property of optical radiation coming from the respective capture pixel region (38), and generating, as a sequence of capture pixel data (D$_i$), a time sequence of capture pixel data (D$_i$) respectively allocated to the integration intervals, said data reproducing the property of the optical radiation from the respective capture pixel region (38), integrated over the respective integration interval and the respective capture pixel region (38), wherein
in the method the sequences of capture pixel data (D$_i$) are employed as pixel data for local sequences of pixels along the transport direction for the digital image of the portion of the value document (12), and capture pixel data (D$_i$) of at least one of the sequences of capture pixel data (D$_i$) are corrected while employing capture pixel data (D$_i$) of the same sequence which are allocated to respectively different integration intervals, the correction being effected independently of capture pixel data of a different one of the sequences of capture pixel data, in such a fashion as to reduce influences on the capture pixel data (D$_i$) of the movement of the value document (12) in the transport direction at the specified speed during the capture of the capture pixel data (D$_i$).

2. The method according to claim 1, wherein the portion of the value document (12) is transported in a specified transport direction at a specified speed through capture pixel regions (38) that respectively extend in the transport direction and are disposed transversally to the transport direction,
during the transport past there is captured for the capture pixel regions (38), respectively during integration intervals of at least one specified sequence of integration intervals, at least one property of optical radiation coming from the respective capture pixel region (38), and there is generated a time sequence of capture pixel data (D$_i$) respectively allocated to the integration intervals, said data reproducing the property of the optical radiation from the respective capture pixel region (38), integrated over the respective integration interval and the respective capture pixel region (38), and the sequences of capture pixel data (38) are employed in the method according to claim 1.

3. The method according to claim 1 or claim 2, wherein, upon correcting, capture pixel data (D$_i$) of a sequence are corrected before all capture pixel data (D$_i$) of the sequence are available.

4. The method according to any of the preceding claims, wherein, upon the correction of the capture pixel data (D$_i$) of the at least one sequence, upon a first correction the capture pixel data (D$_i$) for at least one of the integration intervals of the sequence of the integration intervals are first changed in dependence on the capture pixel data (D$_i$) of the same sequence for one of the capture time intervals that precedes, preferably immediately precedes, the integration interval, or for one of the integration intervals that follows, preferably immediately follows, the integration interval, in such a fashion as to reduce the integrated property represented by the capture pixel data (D$_i$).

5. The method according to claim 4, wherein the changing of the capture pixel data (D$_i$) upon the first correction additionally takes place in dependence on the transport speed and/ or the length of the integration interval and/ or the extension of the capture pixel region (38) in the transport direction.

6. The method according to claim 4 or 5, wherein, upon correcting, upon a second correction the capture pixel data (D$_i$) which were corrected upon the first correction for the at least one sequence and the at least one integration interval are changed in dependence on the capture pixel data (D$_i$) and/or the capture pixel data (D$_i$) which were corrected upon the first correction of the same sequence, for one of the capture time intervals that follows, preferably immediately follows, the at least one integration interval, or for one of the integration intervals that precedes, preferably immediately precedes, the integration interval, in such a fashion as to reduce an integrated property represented by the capture pixel data (D$_i$).

7. The method according to claim 6, wherein the changing takes place additionally in dependence on the transport speed and/ or the length of the integration interval and/ or the extension of the capture pixel region (38) in the transport direction.

8. The method according to claim 6 or 7, wherein for correction after the first and the second correction the capture pixel data ($D_i$) which were corrected upon the second correction are corrected with a factor depending on the transport speed, the length of the integration interval and the extension of the capture pixel region in the transport direction.

9. The method according to any of claims 1 to 3, wherein, upon correcting the capture pixel data ($D_i$), at least one, preferably contiguous, part of the sequence of the capture pixel data is filtered.

10. The method according to claim 9, wherein for filtering the part of the sequence is folded with one, preferably symmetric, filter function.

11. The method according to claim 10, wherein the filter function drops as the distance increases.

12. The method according to claim 10 or claim 11, wherein the filter function changes sign at least once as the distance increases.

13. A device for determining a digital image of at least a portion of a value document (12) with a line camera (30) from sequences of capture pixel data ($D_i$), which are obtainable by transporting the portion of the value document (12) in a specified transport direction at a specified speed through capture pixel regions (38) that extend respectively in the transport direction and are disposed transversally to the transport direction, during the transport past capturing for the capture pixel regions (38), respectively during integration intervals of a specified sequence of integration intervals, at least one property of optical radiation coming from the respective capture pixel region (38), and generating a time sequence of capture pixel data ($D_i$) respectively allocated to the capture time intervals, said data reproducing the property of the optical radiation from the respective capture pixel region (38), integrated over the respective integration interval and the respective capture pixel region (38), wherein the device comprises a correction device (34) which is configured so as to execute a method according to claims 1 to 12.

14. An apparatus for generating a digital image of at least a portion of a value document (12), having an image capturing device (16) on which the portion of the value document (12) is transportable in a specified transport direction at a specified speed through capture pixel regions (38) extending in the transport direction, said device capturing, during the transport past, for the capture pixel regions (38), respectively during integration intervals of a specified sequence of integration intervals, at least one property of optical radiation coming from the respective capture pixel region (38), and generating a time sequence of capture pixel data ($D_i$) respectively allocated to the capture time intervals, said data reproducing the property of the optical radiation from the respective capture pixel region (38), integrated over the respective integration interval and the respective capture pixel region, and having an image determination device according to claim 13.

**Revendications**

1. Procédé de détermination d'une image numérique d'au moins une section d'un document de valeur (12) au moyen d'une caméra linéaire (30) à partir de suites de données de pixels de saisie ($D_i$) qui peuvent être obtenues en ce que la section du document de valeur (12) est transportée dans une direction de transport prédéterminée à une vitesse prédéterminée à travers des zones de pixels de saisie (38) s'étendant dans la direction de transport et transversales à la direction de transport, que pendant le passage du transport, pour les zones de pixels de saisie (38) respectivement pendant des intervalles d'intégration d'une suite prédéterminée d'intervalles d'intégration, au moins une propriété de rayonnement optique provenant de la zone respective de pixels de saisie (38) est saisie, et que, en tant que suite de données de pixels de saisie ($D_i$), une suite temporelle de données de pixels de saisie ($D_i$) respectivement affectées aux intervalles d'intégration est générée, lesquelles reproduisent la propriété, intégrée sur l'intervalle respectif d'intégration et de la zone respective de pixels de saisie (38), du rayonnement optique provenant de la zone respective de pixels de saisie (38),

cependant que

lors du procédé, les suites de données de pixels de saisie ($D_i$) sont utilisées en tant que données de pixels pour des suites locales de pixels le long de la direction de transport pour l'image numérique de la section du document de valeur (12), et des données de pixels de saisie ($D_i$) d'au moins une des suites de données de pixels de saisie

($D_i$) sont corrigées en utilisant des données de pixels de saisie ($D_i$) de la même suite respectivement affectées à d'autres intervalles d'intégration, indépendamment de données de pixels de saisie d'une autre des suites de données de pixels de saisie, de telle façon que des influences du déplacement du document de valeur (12) à la vitesse prédéterminée dans la direction de transport pendant la saisie des données de pixels de saisie ($D_i$) sont réduites aux données de pixels de saisie ($D_i$).

**2.** Procédé selon la revendication 1, dans lequel la section du document de valeur (12) est transportée dans une direction de transport prédéterminée à une vitesse prédéterminée à travers des zones de pixels de saisie (38) s'étendant respectivement dans la direction de transport et transversales à la direction de transport, pendant le passage du transport, pour les zones de pixels de saisie (38) respectivement pendant des intervalles d'intégration d'au moins une suite prédéterminée d'intervalles d'intégration, au moins une propriété de rayonnement optique provenant de la zone respective de pixels de saisie (38) est saisie, et une suite temporelle de données de pixels de saisie ($D_i$) respectivement affectées aux intervalles d'intégration est générée, lesquelles reproduisent la propriété, intégrée sur l'intervalle respectif d'intégration et de la zone respective de pixels de saisie (38), du rayonnement optique provenant de la zone respective de pixels de saisie (38), et les suites de données de pixels de saisie ($D_i$) sont utilisées lors du procédé selon la revendication 1.

**3.** Procédé selon la revendication 1 ou la revendication 2, dans lequel, lors de la correction, des données de pixels de saisie ($D_i$) d'une suite sont corrigées avant que toutes les données de pixels de saisie ($D_i$) de la suite soient disponibles.

**4.** Procédé selon une des revendications précédentes, dans lequel, lors de la correction des données de pixels de saisie ($D_i$) de la au moins une suite, lors d'une première correction les données de pixels de saisie ($D_i$) sont, pour au moins un des intervalles d'intégration de la suite des intervalles d'intégration, modifiées de telle façon tout d'abord en fonction des données de pixels de saisie ($D_i$) de la même suite pour un des intervalles de durée de saisie précédant l'intervalle d'intégration, de préférence le précédant immédiatement, ou pour un des intervalles d'intégration succédant l'intervalle d'intégration, de préférence lui succédant immédiatement, que la propriété intégrée représentée par les données de pixels de saisie ($D_i$) est réduite.

**5.** Procédé selon la revendication 4, dans lequel la modification des données de pixels de saisie ($D_i$) lors de la première correction a lieu en outre en fonction de la vitesse de transport et/ou de la longueur de l'intervalle d'intégration et/ou de l'extension de la zone de pixels de saisie (38) dans la direction de transport.

**6.** Procédé selon la revendication 4 ou 5, dans lequel, lors de la correction, lors d'une deuxième correction les données de pixels de saisie ($D_i$) corrigées lors de la première correction sont, pour la au moins une suite et le au moins un intervalle d'intégration, modifiées de telle façon en fonction des données de pixels de saisie ($D_i$) et/ou des données de pixels de saisie ($D_i$) de la même suite corrigées lors de la première correction, pour un des intervalles de durée de saisie succédant au au moins un intervalle d'intégration, de préférence lui succédant immédiatement, ou pour un des intervalles d'intégration précédant l'intervalle d'intégration, de préférence le précédant immédiatement, qu'une propriété intégrée représentée par les données de pixels de saisie ($D_i$) est réduite.

**7.** Procédé selon la revendication 6, dans lequel la modification a lieu en outre en fonction de la vitesse de transport et/ou de la longueur de l'intervalle d'intégration et/ou de l'extension de la zone de pixels de saisie (38) dans la direction de transport.

**8.** Procédé selon la revendication 6 ou 7, dans lequel, pour la correction après la première et la deuxième correction, les données de pixels de saisie ($D_i$) corrigées lors de la deuxième correction sont corrigées avec un facteur dépendant de la vitesse de transport, de la longueur de l'intervalle d'intégration et de l'extension de la zone de pixels de saisie dans la direction de transport.

**9.** Procédé selon une des revendications de 1 à 3, dans lequel, lors de la correction des données de pixels de saisie ($D_i$), au moins une partie, de préférence d'un seul tenant, de la suite des données de pixels de saisie est filtrée.

**10.** Procédé selon la revendication 9, dans lequel, pour le filtrage, la partie de la suite est pliée avec une fonction de filtrage, de préférence symétrique.

**11.** Procédé selon la revendication 10, dans lequel la fonction de filtrage décroît avec l'augmentation de l'espacement.

**12.** Procédé selon la revendication 10 ou la revendication 11, dans lequel la fonction de filtrage change de signe au moins une fois avec l'augmentation de l'espacement.

**13.** Equipement de détermination d'une image numérique d'au moins une section d'un document de valeur (12) au moyen d'une caméra linéaire (30) à partir de suites de données de pixels de saisie ($D_i$) qui peuvent être obtenues en ce que la section du document de valeur (12) est transportée dans une direction de transport prédéterminée à une vitesse prédéterminée à travers des zones de pixels de saisie (38) s'étendant respectivement dans la direction de transport et transversales à la direction de transport, que, pendant le passage du transport, pour les zones de pixels de saisie (38) respectivement pendant des intervalles d'intégration d'une suite prédéterminée d'intervalles d'intégration, au moins une propriété de rayonnement optique provenant de la zone respective de pixels de saisie (38) est saisie et qu'une suite temporelle de données de pixels de saisie ($D_i$) respectivement affectées aux intervalles d'intégration est générée, lesquelles reproduisent la propriété, intégrée sur l'intervalle respectif d'intégration et de la zone respective de pixels de saisie (38), du rayonnement optique provenant de la zone respective de pixels de saisie (38), cependant que l'équipement comprend un équipement de correction (34) conçu de telle façon qu'il exécute un procédé selon les revendications de 1 à 12.

**14.** Dispositif de génération d'une image numérique d'au moins une section d'un document de valeur (12), comprenant un équipement de capture d'image (16) auquel la section du document de valeur (12) est transportable dans une direction de transport prédéterminée à une vitesse prédéterminée à travers des zones de pixels de saisie (38) s'étendant dans la direction de transport, lequel, pendant le passage du transport, pour les zones de pixels de saisie (38) respectivement pendant des intervalles d'intégration d'une suite prédéterminée d'intervalles d'intégration, saisit au moins une propriété de rayonnement optique provenant de la zone respective de pixels de saisie (38) et génère une suite temporelle de données de pixels de saisie ($D_i$) respectivement affectées aux intervalles de temps de saisie, lesquelles reproduisent la propriété, intégrée sur l'intervalle respectif d'intégration et de la zone respective de pixels de saisie, du rayonnement optique provenant de la zone respective de pixels de saisie (38), et un équipement de détermination d'image numérique selon la revendication 13.

Fig. 1

Fig. 2

Fig. 3

Fig. 4

Erfasse Wert $D_i$ für ein
Erfassungsdauerintervall
an der Stelle i der Folge

S10

Subtrahiere für alle i>1 Anteil
des Wertes $D_{i-1}$ für das
vorhergehende Erfassungsdauerintervall von $D_i$

S12

Subtrahiere von $D_i$ Anteil
des Wertes $D_{i+1}$ für das
folgende
Erfassungsdauerintervall

S14

Werte skalieren

S16

**Fig. 5**

Erfasse Werte $D_i$ für
Erfassungsdauerintervalle
an der Stelle i der Folge

S20

Filtere die Werte $D_i$

S20

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2124190 A1

- DE 102010018142 A1